(19) Europäisches Patentamt / European Patent Office / Office européen des brevets

(11) **EP 2 086 141 B1**

(12) **EUROPEAN PATENT SPECIFICATION**

(45) Date of publication and mention
of the grant of the patent:
**03.08.2011 Bulletin 2011/31**

(51) Int Cl.:
*H04L 1/00* (2006.01)        *H04B 7/02* (2006.01)
*H04L 25/03* (2006.01)

(21) Application number: **08001609.0**

(22) Date of filing: **29.01.2008**

(54) **System for transmitting information data from a transmitter to a receiver over a nested channel**

System zum Senden von Informationsdaten von einem Sender zu einem Empfänger über einen verschachtelten Kanal

Système de transmission de données d'informations depuis un transmetteur vers un récepteur sur un canal imbriqué

(84) Designated Contracting States:
**AT BE BG CH CY CZ DE DK EE ES FI FR GB GR HR HU IE IS IT LI LT LU LV MC MT NL NO PL PT RO SE SI SK TR**

(43) Date of publication of application:
**05.08.2009 Bulletin 2009/32**

(73) Proprietors:
• **Mitsubishi Electric R&D Centre Europe B.V.**
**1119 NS Schiphol Rijk (NL)**
Designated Contracting States:
**FR**
• **MITSUBISHI ELECTRIC CORPORATION**
**Chiyoda-ku**
**Tokyo 100-8310 (JP)**
Designated Contracting States:
**AT BE BG CH CY CZ DE DK EE ES FI GB GR HR HU IE IS IT LI LT LU LV MC MT NL NO PL PT RO SE SI SK TR**

(72) Inventor: **Gresset, Nicolas**
**35708 Rennes Cedex 7 (FR)**

(74) Representative: **Maillet, Alain**
**Cabinet Le Guen Maillet**
**5, place Newquay**
**B.P. 70250**
**35802 Dinard Cedex (FR)**

(56) References cited:
• **GHASSAN M KRAIDY ET AL: "Coding for the Non-Orthogonal Amplify-and-Forward Cooperative Channel" INFORMATION THEORY WORKSHOP, 2007. ITW '07. IEEE, IEEE, PI, 1 September 2007 (2007-09-01), pages 626-631, XP031136668 ISBN: 978-1-4244-1563-2**
• **GENYUAN WANG ET AL: "Nested cooperative encoding protocol for wireless networks with high energy efficiency" SIGNAL PROCESSING ADVANCES IN WIRELESS COMMUNICATIONS, 2005 IEEE 6TH WORKSHOP ON NEW YORK, NY, USA JUNE 2-8, 2005, PISCATAWAY, NJ, USA, IEEE, 2 June 2005 (2005-06-02), pages 821-825, XP010834635 ISBN: 978-0-7803-8867-3**
• **HEDAYAT A ET AL: "Cooperative communication in wireless networks" IEEE COMMUNICATIONS MAGAZINE, IEEE SERVICE CENTER, PISCATAWAY, US, vol. 42, no. 10, 1 October 2004 (2004-10-01), pages 74-80, XP011120045 ISSN: 0163-6804**
• **GUPTA P ET AL: "Towards an information theory of large networks: an achievable rate region" IEEE TRANSACTIONS ON INFORMATION THEORY, US, vol. 49, no. 8, 1 August 2003 (2003-08-01), pages 1877-1894, XP011098653 ISSN: 0018-9448**
• **AAZHANG B ET AL: "User cooperation diversity-part I: system description" IEEE TRANSACTIONS ON COMMUNICATIONS, IEEE SERVICE CENTER, PISCATAWAY, NJ, US, vol. 51, no. 11, 1 November 2003 (2003-11-01), pages 1927-1938, XP011103483 ISSN: 0090-6778**

- BOUTROS J ET AL: "Soft-input soft-output lattice sphere decoder for linear channels" GLOBECOM'03. 2003 - IEEE GLOBAL TELECOMMUNICATIONS CONFERENCE. CONFERENCE PROCEEDINGS. SAN FRANCISCO, CA, DEC. 1 - 5, 2003; [IEEE GLOBAL TELECOMMUNICATIONS CONFERENCE], NEW YORK, NY : IEEE, US, vol. 3, 1 December 2003 (2003-12-01), pages 1583-1587, XP010677561 ISBN: 978-0-7803-7974-9

- DEJONGHE A ET AL: "Turbo-equalization for multilevel modulation: an efficient low-complexity scheme" ICC 2002. 2002 IEEE INTERNATIONAL CONFERENCE ON COMMUNICATIONS. CONFERENCE PROCEEDINGS. NEW YORK, NY, APRIL 28 - MAY 2, 2002; [IEEE INTERNATIONAL CONFERENCE ON COMMUNICATIONS], NEW YORK, NY : IEEE, US, vol. 3, 28 April 2002 (2002-04-28), pages 1863-1867, XP010589809 ISBN: 978-0-7803-7400-3

**Description**

The present invention relates to a system for transmitting information data from a transmitter to a receiver over a nested channel. The present invention concerns also a receiver of such a system.

In the following, a channel resource means a frequency bandwidth, a time interval and possibly several spatial dimensions brought by transmit and receive antennas placed in different spatial positions.

Signals transmitted over wireless channels undergo severe degradations due to channel variations such as fading, shadowing, and interference from other transmitters, which allows to consider the channel as a random variable. In the following, are considered slow channel variations with respect to the time needed for transmission of the information words, but the channel realization is supposed to have changed between two transmissions of information words. One major way to combat the so-called quasi-static fading is to provide diversity in either time, frequency, or space.

The channel diversity order is defined as the number of independent fading random variables observed in the channel resource. The transmission/reception scheme is able to collect a given amount of diversity, called diversity order of the system, upper bounded by the channel diversity order, also called full diversity order.

When an information word is not correctly estimated by the receiver, an error event occurs. The main parameter allowing to compute the probability of error associated to a given error event is the Euclidean distance between the noiseless received signal associated to the transmitted information word and the reconstructed noiseless received signal associated to the decoded information word. The diversity order of the error event is defined as the number of independent random variables involved in the Euclidean distance associated to the error event. Finally, the system diversity order is equal to the minimal diversity order of all possible error events or equivalently all possible pairs of information words.

Multiple-antenna systems that provide high orders of spatial diversity and high capacity have been extensively studied. However, due to the expensive analog Radio-Frequency components, the number of antennas in mobile terminal is often limited to one transmission Radio-Frequency path and two reception Radio-Frequency paths. Such mobile terminals do not allow transmitted signals to attain high diversity orders over narrow band channels, such as OFDM-based (Orthogonal Frequency-Division Multiplexing) transmission systems.

The concept of 'cooperative communications' has then been introduced where multiple terminals use the capabilities of each other. This allows the signals to attain high diversity orders, being transmitted by other terminals leading in that way to a virtual antenna array as proposed by Sendonaris et al. in the article 'User cooperation diversity. Part I. system description', IEEE Transactions on Communications, vol. 51, no. 11, pp. 1927-1938, Nov. 2003'. In the following, we describe the idea of cooperative transmission protocols, which is an application of the invention described hereafter.

One potential application of such systems is in wireless *ad-hoc* networks, such as mesh networks for instance, which does not depend on a central control unit and does not have a fixed infrastructure. The nodes communicate by forming a network based on channel conditions and mobile locations.

Another application of such systems is the cooperation of in-cell users in a cellular system. Reliable communication can be achieved through diversity and by relaying signals from terminals that are Far from the base station. The advantage of such systems compared to traditional ones is that the more users there are in a network, the more reliably one can communicate. This is the result of the non-rigidity of the infrastructure of cooperative systems. In the opposite, the rigidity of the infrastructure of non-cooperative systems involves an increase of blocking probability with the number of terminals that are sharing the network.

The drawback of cooperative systems is that the inter-user channel is noisy. In order to counterfeit this drawback, multiple cooperation protocols have been developed and define the way the cooperation between users is performed.

Cooperation protocols can be classified into two major categories: Amplify-and-Forward (AF) and decode-and-forward (DF). We focus in the following on the AF protocols.

Using the AF protocol, a relay, which is for example an user mobile radio equipment or an equipment used for extending the range of a cell, only amplifiers the signal received from a source (a base station or another relay) before forwarding it to a destination (a user equipment or another relay). These protocols are easy to implement in practice, as the computational complexity they introduce at the relays is limited to a scaling operation.

Multiple AF protocols have been designed for the single-relay case such as, for example, the non-orthogonal amplify-and-forward (NAF) protocol, also known as the TDMA-based Protocol I, in which the source broadcasts a signal to both the relay and the destination in the first phase. In the second phase, the relay scales the signal and forwards it to the destination, while the source transmits another message to the destination (Nabar et al., "Fading relay channel: performance limits and space-time signal design', IEEE Journal on Selected Areas in Communications, vol. 22, n˚. 6, pp. 1099-1109, August 2004).

In the following, we focus on the case where multiple relays are used by the transmission system. The selected transmission protocol transmits a signal over each time slot of a set of predetermined set of $M$ time slots.

For example, the well-known Slotted Amplify-and-Forward (SAF) protocol may be used. However, the invention is not limited to the transmission over a half-duplex non-orthogonal Amplify-and-Forward cooperative channel.

In Ghassan et al. ("Coding for the Non-orthogonal amplify-and-forward Cooperative channel", Information theory workshop, 2007, ITW'07, pages 626-631), the authors investigate the diversity order observed after decoding an encoded message sent through a slotted amplify and forward channel. In order to do so, they define a Matryoshka block fading channel taking into account the modulation, a linear precoder, the multi-relay channel with SAF protocol, and the soft-bit estimation. In the paper, the soft-bit estimation is processed by a maximum a posteriori algorithm which is of maximal complexity.

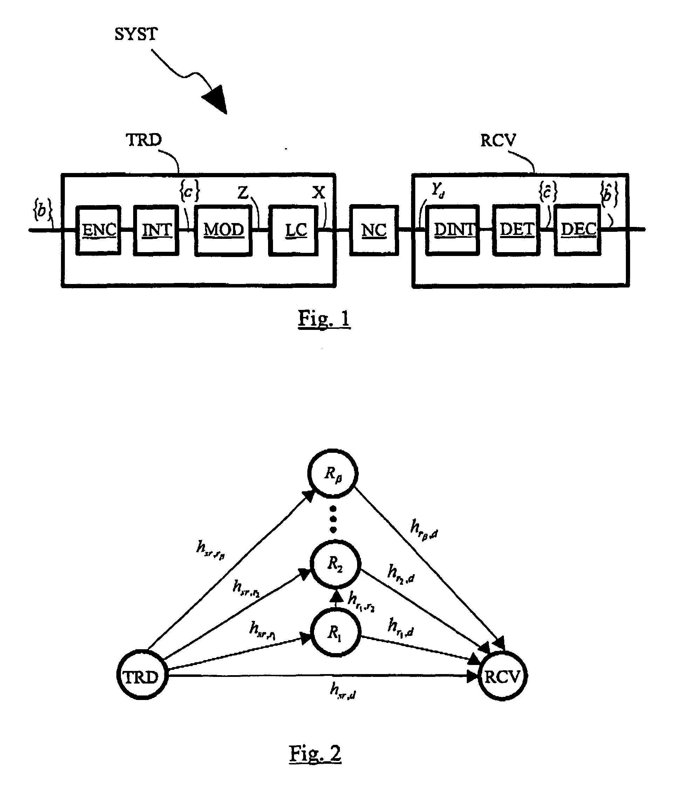

Fig. 1 is a schematic diagram depicting a transmission system according to the present invention. The system SYST comprises a transmitter TRD, a nested channel NC comprising M time slots and described by a *MxP* channel matrix *H*, and a receiver RCV. The transmitter TRD is for example a base station, the receiver RCV is for example a mobile user equipment.

The transmitter TRD comprises an encoder ENC following an error correcting code structure, a binary modulator MOD and a linear combiner LC. Roughly speaking, the digital transmission is made as follows: Information data bits {*b*} to transmit fed the encoder ENC with a Rate *Rc= Ki/Ko*, *Ki* is the number of input data bits {*b*} and *Ko* is the number of coded bits of the output codewords {*c*}. The encoder ENC may follow any type of error correcting code structure such as, for example, the LDPC (Low Density Parity Check) codes, turbo-codes, block-codes (Reed-Solomon for example), binary convolutional codes, etc. The coded bits then fed the binary modulator MOD.

The binary modulator MOD is a BPSK (Binary Phase Shift Keying) or QPSK (Quadrature Phase Shift Keying) modulation for example and preferably a $2^m$-Quadrature Amplitude Modulation ($2^m$-QAM). The inputs of the binary modulator MOD are coded bits {*c*} or an interleaved version {*c*} of such coded bits according to a variant of the system SYST in which the transmitter TRD comprises a bit interleaver INT and the receiver RCV comprises the associated bit de-interleaver DINT, as illustrated in Fig 1. The outputs of the binary modulator MOD are symbols which are vectors of modulation symbols which are split in *M*-length vector *Z* of modulation symbols *Z(i)*.

The modulation symbols *Z(i)* of a same vector *Z* are then combined together thanks to the linear combiner LC which provides an output vector *X* of *M* combined symbols associated to one transmission over the nested channel NC.

The combined symbols *X(i)* of each vector *X*, obtained by the product of the vector *Z* by a *MxM* complex linear combining matrix *S*, are thus transmitted over the nested channel NC. Note that the matrix *S* can possibly be an identity matrix.

In the following, the modulation symbols *Z(i)* of a *M*-length vector *Z* which are used for defining the linear combinations are called combined modulation symbols and the modulation symbols of said *M*-length vector *Z* which are not used for defining such linear combinations are called non-combined modulation symbols.

The nested channel NC is defined from a set of *N* independent fading random variables *a(j)* and the norm of the *i*-th row of the channel matrix *H* is a function of a subset $\Gamma(i)$ of *D(i)* random variables *a(j)*. The diversity order of the uncoded performance of a modulation transmitted on the *i*-th row of the *MxP* matrix *H* is equal to *D(i)*. Without loss of generalities, the matrix rows are sorted such that $i_1 \le i_2 \Rightarrow \Gamma(i_1) \supseteq \Gamma(i_2)$ and $D(i_1) \ge D(i_2)$.

According to an embodiment of the invention, *M=P* and the nested channel NC is a sliding-triangular channel described by an upper-triangular matrix *H* given by:

$$
H = \begin{bmatrix} a_1 & a_2 & a_3 & a_4 & \cdots & a_M \\ 0 & a_1 & a_3 & & & \vdots \\ \vdots & \ddots & a_1 & a_4 & & \vdots \\ \vdots & & \ddots & a_1 & \ddots & \vdots \\ \vdots & & & \ddots & a_1 & a_M \\ 0 & \cdots & \cdots & \cdots & 0 & a_1 \end{bmatrix} \otimes \begin{bmatrix} \gamma_{1,1} & \gamma_{1,2} & \cdots & \cdots & \cdots & \gamma_{1,M} \\ 0 & \gamma_{2,2} & & & & \vdots \\ \vdots & & \ddots & \ddots & & \vdots \\ \vdots & & & \ddots & \ddots & \vdots \\ \vdots & & & & \ddots & \ddots & \vdots \\ 0 & \cdots & \cdots & \cdots & 0 & \gamma_{M,M} \end{bmatrix}
$$

where $\otimes$ denotes the term by term product, $\alpha 1, \alpha 2, ..., \alpha M$ are the fading random variable coefficients establishing the diversity properties of the channel The $\gamma_{i,j}$ values are random variables or fixed parameters. A channel is equivalent to a sliding-triangular channel as soon as it has the same configuration of fading coefficients.

Note that the modulation symbols *Z(j)* may be perturbed by other channel imperfections than the ones associated to the random variables *aj*, for example, additive noise, other multiplicative random variables.

According to an embodiment of the sliding-triangular channel, the channel is defined by a SAF protocol for cooperative transmissions with several relays.

Fig. 2 represents the inter-relay communications protocol of the SAF channel model. Note that in practice, noisy and attenuated versions of combined symbols *X(j)* are received at the relays and receiver. According to this example, β relays are used and this involves that one use of the channel includes (β+1) time slots Tsi of the SAF protocol, and the size of the complex linear combining matrix $S$ is chosen such that $M= \beta+1$. During the first time slot TS1 of the SAF protocol, the transmitter TRD transmits the first symbol $X(1)$, which is received by a first relay $R(1)$ and by the receiver RCV. During the second time slot TS2 of the general SAF protocol, the transmitter TRD transmits the second symbol $X(2)$ and the relay $R(1)$ transmits the previously received version of the symbol $X(1)$, which are received by the receiver RCV and a second relay $R(2)$. During the third time slot TS3 of the general SAF protocol, the transmitter TRD transmits the third symbol $X(3)$ and the relay $R(2)$ transmits the previously received and combined versions of the symbols $X(1)$ and $X(2)$, which are received by the receiver RCV and a third relay $R(3)$. During the last time slot TS($\beta+1$) of the general SAF protocol, the transmitter TRD transmits the last symbol $X(\beta+I)$ and the last relay $R(\beta)$ transmits the previously received and combined versions of the symbols $X(1),...,X(\beta)$, which are received by the receiver. In consequence, a version of the first symbol $X(1)$ is transmitted during each of the $(\beta +1)$ time slots of one channel use. A version of the $i$-th symbol xi is transmitted during the last $(\beta+1)$-$i$+1 time slots and versions of the last symbol $X(\beta+1)$ is received by the received RCV only during the last time slot of the SAF protocol. The relay $R(1)$ receives a version of the first symbol $X(1)$ during the first time slot TS1 and re-transmits it during the second time slot TS2. The $i$-th relay $R(i)$ receives a combination of the versions of the first $i$ symbols xi during the $i$-th time slot, and re-transmits it during the $i+1$-th time slot (the $i$-th relay receives the signal transmitted by the transmitter and the $i-1$-th relay). Consequently, the first symbol $X(1)$ carries coded data bits, estimation of which have a diversity order $D(\beta+1)$ as perceived by the decoder DEC of the receiver RCV, the i-th symbol $X(i)$ carries coded data bits, estimation of which have a diversity order $D(\beta+2-i)$ as perceived by the decoder DEC, and the last symbol $X(\beta+1)$ carries coded data bits, estimation of which have a diversity order $D(1)$ as perceived by the decoder DEC. The receiver RCV receives a version of the first symbol $X(1)$ during the first time slot TS1, a combination of versions of the first i symbols $X(j)$ during the time slot Tsi and a combination of versions of all the $(\beta+1)$ symbols $X(j)$ during the last time slot.

Referring to Fig. 1, mathematically speaking, the signal model is given by:

$$Y_d = Z \times S \times H + W_c = X \times H + W_c$$

where $Yd$ is a M-length vector of received signals, $Z$ is a $M$-length vector of modulation symbols $Z(i)$, $Wc$ is an additive noise $M$-length vector, and $X$ is a $M$-length output vector of combined symbols $X(i)$.

When the nested channel NC is a SAF channel, the mathematical model of the signal transmitted between the transmitter TRD and the receiver RCV when $\beta$ relays $R(i)$ are considered is given by:

$$Y_d(i) = \sqrt{\varepsilon_i}.h_{sr,d}.X(i) + \sqrt{1-\varepsilon_i}.h_{r_i,d}.\gamma_{i-1}.Y_r(i-1) + W_d(i)$$

$$Y_r(i) = \sqrt{\varepsilon_i}.h_{sr,r_i}.X(i) + \sqrt{1-\varepsilon_i}.h_{r_{i-1},r_i}.\gamma_{i-1}.Y_r(i-1) + W_r(i)$$

with $i=1,...,b+1$. Subscripts $sr$ (stands for source), $d$ (stands for destination) and $ri$ (stands for relay) correspond respectively to the transmitter TRD, the receiver RCV and the $i$-th relay. The unit variance complex symbol $X(i)$ is transmitted in the $i$-th time slot, the received signal at the receiver in the $i$-th time slot is $Yd(i)$, while $Yr(i)$ is the signal received by the $i$-th relay Ri. The coefficient $\varepsilon i$ represents the energy transmitted by the transmitter TRD in the i-th time slot. The $hk,l$ are the fading coefficients and $Wd(i)$ and $Wr(i)$ are Additive White Gaussian Noise (AWGN) components. The $\gamma i$ are the energy normalization coefficients at the i-th relay Ri, subject to $E|\gamma i \gamma ri-1|^2 \leq 1$ and $\gamma 0=0$. From this channel model, we remark that the SAF channel has the same block diversity properties as the sliding triangular channels.

The receiver RCV comprises a detector DET and a decoder DEC.

The detector DET provides either hard or soft output estimates on the coded bits associated to a $M$-length vector $Z$ of modulation symbols $Z(i)$ carried by a $P$-length vector $Y_d$.

A hard output estimate is an estimate of a coded bit the value of which equals to either $0$ or $1$. A soft output estimate is related to the probability that the coded bit is equal to $1$.

A maximum likelihood (ML) detector provides the best hard output estimates on coded bits. Moreover, the optimal detection performance may be achieved from the ML detector when an exhaustive search over the all possible candidate vectors $Z$ is proceeded for maximizing the likelihood $p(Y_d|Z)$, i.e. finding the symbol $\tilde{Z}$ according to

$$\tilde{Z} = \arg\max_{z} P(Y_d|Z) \quad (1)$$

or for finding the symbol $\tilde{Z}$ which minimizes a figure of merit which is for example the Euclidean distance $\|Y_d - Z \times S \times H\|^2$

$$\tilde{Z} = \arg\min_{Z}\left(\|Y_d - Z \times S \times H\|^2\right)$$

The estimates $\{\hat{c}\}$ on coded bits associated to a M-length vector $Z$ of modulation symbols $Z(i)$ carried by a $P$-length vector $Y_d$ are then obtained from the symbol $\tilde{Z}$.

The complexity of such exhaustive search quickly becomes intractable because the number of possible candidate vectors $Z$ is huge in practice. For example, when the binary modulator MOD is a $2^m$-Quadrature Amplitude Modulation, the exhaustive search is proceeded over $2^{mM}$ candidates and becomes intractable when the number $mM$ increases.

Some reduced-complexity yet optimal receivers exist such as the Sphere Decoder ([64] E. Viterbo and J. Boutros, "A universal Lattice Decoder for Fading Channels," IEEE Trans. Inform. Theory, vol. 45, pp. 1639-1642, July 1999), but are still too complex for low-cost communication devices.

A Maximun A posteriori Probability (MAP) detector is often used to provide soft output estimates on coded bits associated to a $M$-length vector $Z$ of modulation symbols $Z(i)$ carried by a $P$-length vector $Y_d$ under the form of probabilities.

The optimal detection performance is achieved from the MAP detector when an exhaustive search over the all possible candidate vectors $Z$ is proceeded by maximising a figure of merit function that minimises the error probability for each coded bit $cj$ associated to said $M$-length vector $Z$ of modulation symbols $Z(i)$. For example, the estimate is an extrinsic probability or an A Posteriori Probability.

The A Posteriori Probability (APP) relative to a coded bit ci is computed via the following exhaustive marginalization:

$$APP(c_i) = \frac{\sum_{Z \in \Omega(c_i=1)} p(Y_d \mid Z) \prod_j \pi\left(c_j = f(j,Z)\right)}{\sum_{Z \in \Omega} p(Y_d \mid Z) \prod_j \pi\left(c_j = f(j,Z)\right)} \quad (2)$$

with $p(Y_d|Z) \propto e$ , where $N0$ is the noise variance, $\Omega(ci=1)$ is the set of possible candidate vectors $Z$ labelling of which have the $i$-th bit equal to $1$, $\Omega$ is the set of all possible candidate vectors $Z$, and $f(j,Z)$ is the value of the $j$-th bit in the binary labelling associated to a potential candidate vector $Z$.

The estimates on coded bits $\{\hat{c}\}$ associated to a $M$-length vector $Z$ of modulation symbols $Z(i)$ carried by a $M$-length vector $Yd$ is then obtained from the maximum A Posteriori Probability (APP) relative to each coded bit $ci$.

As a remark, the soft output estimate relative to a coded bit $ci$ is also often expressed as a Log-Likelihood Ratio (LLR) given by

$$LLR_i = \log\left(\frac{APP(c_i=1)}{APP(c_i=0)}\right)$$

According to a variant of the MAP detector, a list-based marginalization (J. Boutros, N. Gresset, L. Brunel, and M. Fossorier, "Soft-input/soft-output lattice sphere decoder for linear channels," in Proc. GlobeCom, San Francisco, Dec. 2003) is used in order to reduce the computational complexity while choosing a subset of all possible vectors of symbols.

The decoder DEC converts such estimates $\{\hat{c}\}$ into estimates $\{\hat{b}\}$ of transmitted information data bits $\{b\}$.

Alternatively, in order to reduce the complexity of the receiver, sub-optimal detectors such as linear equalizers are often used to produce non-optimal estimates of the coded bits $\{\hat{c}\}$. Unfortunately, these types of detector do not allow observing the diversity order brought by linear combining at the output of the detector.

In the following, optimal detector means a detector that allows to recover the diversity brought by linear combining and we call sub-optimal detector a detector that doesn't allow recovering the diversity brought by linear combining.

For example, let us consider a symbol-wise Zero-Forcing (ZF) hard output detector. The estimate on coded bits associated to a modulation symbol $Z(j)$ of a $M$-length vector $Z$ of modulation symbols is computed independently to each other:

$$\tilde{Z}(j) = DEC\left(Y_d \frac{\left(S_j H\right)^t}{\left\|S_j H\right\|^2}\right) \qquad (3)$$

where *Dec(.)* is a decision function, *Sj* is the *j*-th row of the matrix S and *t* denotes the transpose conjugate of a matrix.

Alternatively, the detector is a vector-wise ZF, the estimates on coded bits associated to the *M* non-combined modulation symbols of a *M*-length vector of modulation symbols *Z* are jointly computed:

$$\left[\tilde{Z}(1), \cdots, \tilde{Z}(M)\right] = Dec\left[Y_d (SH)^t \left((SH)(SH)^t\right)^{-1}\right] \qquad (4)$$

The symbol-wise or vector-wise detectors presented above may classically be MMSE linear equalizers, Serial interference Cancellation (SIC), Parallel Interference Cancellation (PIC). Additionally, a soft-bit conversion that converts estimates on the symbols into estimates on the coded bits might be used instead of the decision module Dec().

The problem solved by the invention is to optimise the transmission and reception system SYST in order to simultaneously obtain performance exhibiting a target diversity order while minimizing the complexity of the receiver RCV.

Indeed, according to the invention, a receiver of a *P*-length vector of received signals transmitted by a transmitter over a nested channel comprising *M* time slots and described by a *MxP* channel matrix, said *P*-length vector of received signals carrying a *M*-length output vector, associated to one transmission over the nested channel, some components, called combined symbols, of said *M*-length output vector being linearly combined modulation symbols obtained by linear combinations of *s* modulation symbols of a *M*-length vector, called combined modulation symbols, and other components of said *M*-length output vector being modulation symbols of said *M*-length vector of modulation symbols which are not used for defining such linear combinations, called non-combined modulation symbols, said receiver comprising a detector and a decoder, characterised in that it comprises

- a first detector the output of which is an estimate on coded bits associated to the s combined modulation symbols of said M-length vector of modulation symbols, said first detector allowing to recover the diversity order s brought by the linear combining for said estimate, and
- a second detector the output of which is an estimate on coded bits associated to the other *M-s* non-combined modulation symbols of said *M*-length vector of modulation symbols.

According to an embodiment of the detector, the output estimate of the first detector is obtained before the output estimate of the second detector.

According to a variant of this embodiment of the detector, the output estimate of the first detector is taken as an additional input in the second detector.

According to another embodiment of the detector, the output estimate of the second detector is obtained before the output estimate of the first detector.

According to a variant of this embodiment of the detector, the output estimate of the second detector is taken as an additional input in the first detector.

According to another embodiment of the detector, the output estimate of the first detector is taken as an additional input in the second detector and the output estimate of the second detector is taken as an additional input in the first detector.

According to a variant of this embodiment, a final estimate of combined and non-combined symbols is obtained following the computation of more than one estimate from the first detector and the computation of more than one estimate of the second detector.

According to an embodiment of the first detector, the output estimate of the first detector does not take into account the interference from the *M-s* non-combined modulation symbols of said *M*-length vector of modulation symbols.

According to another embodiment of the first detector, the output estimate of the first detector takes into account the interference from the *M-s* non-combined modulation symbols of said *M*-length vector of modulation symbols.

According to another embodiment of the first detector, the output estimate of the first detector is a hard output estimate on coded bits associated to said s combined modulation symbols obtained from a reduced-complexity search compared to an exhaustive search over all possible candidate modulation vectors.

According to another embodiment of the first detector, the output estimate of the first detector is a soft output estimate on coded bits associated to said s combined modulation symbols obtained from a reduced-complexity computation of the marginalization compared to an exhaustive marginalization computed over all possible candidate modulation vectors.

According to an embodiment of the second detector, the output estimate of the second detector does not take into account the interference from the *s* combined modulation symbols of said *M*-length vector of modulation symbols.

According to a variant of this embodiment, the estimate on coded bits associated to a non-combined modulation symbol of said *M*-length vector of modulation symbols is computed independently to each other.

According to another variant of this embodiment, the estimate on coded bits associated to the non-combined modulation symbols of said *M*-length vector of modulation symbols are jointly computed.

The present invention concerns also a system for transmitting information data from a transmitter to a receiver as above-described.

The characteristics of the invention mentioned above, as well as others, will emerge more clearly from a reading of the following description given in relation to the accompanying figures, amongst which:

Fig. 1 is a schematic diagram depicting a transmission system according to the present invention.
Fig. 2 represents the inter-relay communications protocol of the SAF channel model.

Generally speaking, the *MxM* complex linear combining matrix *S* is given by the matrix multiplication *P1xS'xP2*, where *P1* is a row permutation matrix, *P2* is a column permutation matrix, and *S'* is defined as a block diagonal matrix given by:

$$S' = \begin{bmatrix} S'' & 0 \\ 0 & I \end{bmatrix} \quad (5)$$

where *I* is the *(M-s)x(M-s)* identity matrix and the sub-matrix *S''* is a *sxs* complex linear combining matrix that satisfies the following property: let us consider a sxs diagonal fading channel, diagonal elements being independent fading random variables. If an optimal hard output estimate is computed (maximum likelihood) for receiving s symbols linearly combined by the matrix *S''* and transmitted on the diagonal fading channel, the performance measured at the output of the detector DET exhibits a diversity order *s* times higher than the performance with no linear combining matrix *S''*. This is for example achieved with algebraic rotation, such as the well known cyclotomic rotations.

The parameter *s* of the linear combiner LC is called the combining size of the linear combiner. If *O<s<M*, the linear combiner LC is said partial, i.e. only some symbols *X(i)* of the output vector *X* are linear combinations of modulation symbols *Z(j)* of a *M*-length vector *Z* As a remark, the invention is also relevant for the choice *s=1*, i.e., no linear combining.

Without loss of generalities, and thanks to the *P1* matrix, we consider in the following that the combined symbols are always in the *s* first positions. Equivalently, and thanks to *P2* matrix, we consider in the following that the symbols *X(1)*, *X(M-s+2)...,X(M)* of the output vector *X* are linear combinations of the first s modulation symbols *(Z(1),...,Z(s))* of a *M*-length vector *Z* of modulation symbols *Z(i)*. The other *(M-s)* symbols *X(2),...,X(M-s+1)* of said output vector *X* are identical to the modulation symbols *Z(s+1),...,Z(M)* of the *M*-length vector *Z*.

According to an embodiment of the system SYST, the coding rate *Rc* of the encoder ENC, the parameter *M* of the nested channel and the linear combining size *s* are selected dependently one from each other to achieve a target diversity order of the system SYST. For example, if the nested channel is a sliding triangular channel, the 4 variables are linked by the following relationship

$$\delta = \overline{\min}\left(s + \lfloor (1 - R_c)M \rfloor, M\right)$$

For fixed parameters *M* and *Rc,* and for high spectral efficiency modulations (e.g., 16-QAM), several values of *s* may lead to the same target diversity $\delta$. The receiver complexity is minimized by minimizing *s*. In the case of a sliding triangular channel, this leads to

$$s = \arg\min_{s'}\left(\delta = \min\left(s' + \lfloor (1 - R_c)M \rfloor, M\right)\right)$$

According to the invention, the detector DET is a low-complexity near-optimal detector of a *P*-length vector $Y_d$ which produces estimates on the coded bits associated to a *M*-length vector *Z* of modulation symbols *Z(i)* carried by said *P*-length vector $Y_d$. The detector is said to be near-optimal if it can allow achieving, after decoding, performance exhibiting the same diversity order as with an optimal detector.

The detector DET comprises a first detector DET1 intended to estimate the coded bits associated to the s combined modulation symbols of a *M*-length vector *Z* of modulation symbols *Z(i)* carried by a *P*-length vector $Y_d$ and a second detector DET2 intended to estimate the coded bits associated to the *(M-s)* non-combined modulation symbols of said *M*-length vector *Z* of modulation symbols. Note that these detectors may be processed serially or in parallel, once or iteratively as described hereinafter.

According to an embodiment of the detector DET, the output estimate of the detector DET1 is obtained before the output estimate of the detector DET2. The output estimate of the detector DET 1 from which estimates of *s* combined modulation symbols are obtained, may then allow cancelling the contribution of these combined symbols from the *P*-length vector $Y_d$, i.e., reducing the interference level sent by DET2.

According to a variant of this embodiment, the output estimate of the detector DET1 is taken as an additional input in the detector DET2.

According to another embodiment of the detector DET, the output estimate of the detector DET2 is obtained before the output estimate of the detector DET1. The output estimate of the detector DET2 from which estimates of *(M-s)* non-combined modulation symbols are obtained, may then allow cancelling the contribution of these non-combined symbols from the *P*-length vector $Y_d$, i.e., reducing the interference level sent by DET1.

According to a variant of this embodiment, the output estimate of the detector DET2 is taken as an additional input in the detector DET1.

According to another embodiment of the detector DET, the output estimate of the detector DET1 is taken as an additional input in the detector DET2, and likewise the output estimate of the detector DET2 is taken as an additional input in the detector DET1. The estimate of the non-combined symbols may then be helpful to reduce the interference seen by the detector DET1 and the estimate of the combined symbols may then be helpful to reduce the interference seen by the detector DET2. The information given by these additional inputs is for example used for subtracting the contribution of non-combined symbols in the received vector *Yd* before applying the detector DET1 or alternatively for subtracting the contribution of combined symbols in the received vector *Yd* before applying the detector DET2.

According to a variant of this embodiment, the final estimate of combined and non-combined symbols is obtained following the computation of more than one estimate of combined symbols and the computation of more than one estimate of non-combined symbols.

According to a characteristic of the present invention, the first detector DET1 allows to recover the diversity order brought by the linear combiner LC, i.e. by the sub-matrix *S''*, for estimated coded bits associated to said *s* combined modulation symbols. Note that when the matrix *S* is an identity matrix i.e. when non linear combining is processed, the first detector DET1 provides estimates on coded bits associated to the first modulation symbol *Z(1)* of a *M*-length *vector Z*

According to an embodiment of the detector DET1, the estimates on coded bits associated to the *s* combined modulation symbols of a *M*-length vector of modulation symbols *Z* does not take into account the interference from the *(M-s)* non-combined modulation symbols of said *M*-length vector *Z* of modulation symbols.

According to a variant of this embodiment, the estimate on coded bits associated to said *s* combined modulation symbols is preferably based on the computation of a function of an incomplete likelihood probability *p(Yd|Zs, 0)* given by:

$$e^{\dfrac{-\left\| Y_d - Z_{s,0} \times S \times H \right\|^2}{2N_0}} \qquad (6)$$

with *N0* being the noise variance, *Zs, 0* being the *M*-length vector *Z* of modulation symbols, with the *(M-s)* non-combined symbols equal to 0, i.e., *Zs,0=[Z(1),...,Z(s),0,...,0]*.

According to another embodiment of the detector DET1, the estimate on coded bits associated to the *s* combined modulation symbols of a *M*-length vector *Z* of modulation symbols takes into account the interference from the *(M-s)* non-combined modulation symbols of said *M*-length vector *Z* of modulation symbols.

According to a variant of this embodiment, the estimate on coded bits associated to said *s* combined modulation symbols is preferably based on the computation of a function of an incomplete likelihood probability *p(Yd|Zs,0)* given by:

$$e^{\dfrac{-\left\| Y_d - Z_{s,0} \times S \times H \right\|^2}{2N_0 + E\left[\left\| Y_d - Z_{0,M-s} \times S \times H \right\|^2\right]}} \qquad (7)$$

with *N0* being the noise variance, *Z0,M-s* being the *M*-length vector *Z* of modulation symbols, with the *s* combined symbols equal to 0, i.e., *Z0,M-s=[0,...,0,Z(s+1),...,Z(M)]*.

According to an embodiment of the detector DET1, the estimate on coded bits associated to the *s* combined modulation symbols of a *M*-length vector of modulation symbols *Z* taking or not into account the interference from the *M-s* non-combined modulation symbols of said *M*-length vector *Z* of modulation symbols, the detector DET1 provides hard output estimate from a search made over $2^{ms}$ *M*-length vectors *Z* of modulation symbols instead of $2^{mM}$ vectors of modulation symbols as in the prior art.

According to a variant of this embodiment, the detector DET1 is a maximum likelihood (ML) detector as described in the opening paragraph in which the likelihood probability *p(Yd|Z)* in equation (1) is replaced by the incomplete likelihood probability *p(Yd|Zs, 0)* computed according to either equation (6) or (7).

The complexity of a Sphere Decoder is also reduced since a lower number of dimensions (*s* instead of *M*) is taken into account. Indeed, the complexity of the Sphere Decoder is known to be polynomial in the number of dimensions.

According to another variant of this embodiment, a LLL lattice reduction is used for reducing the computational complexity of DET1 while keeping its diversity exploitation capabilities. The detector DET1 is then a near-optimal hard-output detector and as the number of dimensions is reduced, the complexity of the linear combining (LLL reduction) is also reduced.

According to an embodiment of the detector DET1, the detector DET1 provides soft output estimates.

According to a variant of this embodiment, the detector DET1 is a Maximum A Posteriori probability (MAP) detector as described in the opening paragraph in which the likelihood probability *p(Yd|Z)* in equation (2) is replaced by the incomplete likelihood probability *p(Yd|Zs,0)* computed according to either equation (6) or (7) and where a marginalization made over $2^{ms}$ possible candidate s-length vectors of combined modulation symbols instead of $2^{mM}$ vectors of modulation symbols.

The MAP detector guarantees to recover the diversity order s for coded bits associated to the *s* combined modulation symbols of a *M*-length vector *Z* of modulation symbols, and the marginalization being made over the $2^{ms}$ possible candidate vectors *Z* involves a significant decrease of the computational complexity compared to the exhaustive search usually made which is intractable in practice.

According to another variant of this embodiment, the marginalization is a list-based marginalization over a subset of $2^{ms}$ s-length possible candidate vectors of combined symbols (e.g., list sphere decoder). The detector DET1 is then a Probability sub-optimal soft output detector and the complexity of the linear combining and the size of the list are reduced because of the lowest number of dimensions (*s* instead of *M*).

According to a variant of one of these two previous variants, the soft output estimate on coded bits associated to *s* combined symbols takes into account the a priori probabilities *π(cj)* associated to coded bits of said *s* combined modulation symbols and given by the output of the decoder DEC.

This variant allows to improve the detection performance of the receiver RCV.

According to another variant of one of these two previous variants, the soft output estimate on coded bits associated to s combined symbols takes into account the a priori probabilities *π(cj)* associated to coded bits of all modulation symbols and given by the output of the decoder DEC.

According to another characteristic of the present invention, the complexity of the second detector DET2 is a low and preferably negligible compared to the one of first detector DET1.

According to an embodiment of the second detector DET2, the estimate on coded bits associated to the *M-s* non-combined modulation symbols of a *M*-length vector of modulation symbols *Z* does not take into account the interference from the *s* combined modulation symbols of said *M*-length vector *Z* of modulation symbols.

According to a variant of this embodiment, the estimate on coded bits associated to a non-combined modulation symbol *Z(s+j)* of a *M*-length vector *Z* of modulation symbols is computed independently to each other.

When the binary modulator MOD is a $2^m$-Quadrature Amplitude Modulation, the estimate on coded bits associated to said non-combined modulation symbol *Z(s+j)* is given by:

$$\bar{Z}(s+j) = DEC\left( Y_d \frac{\left(S_{x+j}H\right)^t}{\left\|S_{x+j}H\right\|^2} \right) \qquad (8)$$

where *Dec(.)* is a decision function, $S_{s+j}$ is the s+j-th row of the matrix *S* and *t* denotes the transpose conjugate of a matrix.

The detector DET2 is then a linear detector based on the decision function given by equation (8). Said linear detector provides either hard or soft output estimate using, for example, for hard output estimates, MMSE linear equalizers, Serial interference Cancellation (SIC), Parallel Interference Cancellation (PIC), as described in the opening paragraph.

According to another variant of the embodiment of the second detector DET2, the estimates on coded bits associated to the *M-s* non-combined modulation symbols of a *M*-length vector of modulation symbols *Z* are jointly computed.

When the binary modulator MOD is a $2^m$-Quadrature Amplitude Modulation, the estimates on coded bits associated to said non-combined modulation symbols are given by:

$$\left[\tilde{Z}(s+j),\cdots,\tilde{Z}(T)\right]= Dec\left[Y_d\left(S_{s+j,M}H\right)^{\prime}\left(\left(S_{s+j,M}H\right)\left(S_{s+j,M}H\right)^{\prime}\right)^{-1}\right] \quad (9)$$

where $S_{s+j:M}$ is the matrix obtained by the selection of the rows $s+j$ to $M$ of the matrix $S$.

The detector DET2 is then a vectorial detector based on the estimate function given but equation (8). Said vectorial detector provides either hard or soft output estimate using, for example, for hard output estimates, MMSE linear equalizers, Serial interference Cancellation (SIC), Parallel Interference Cancellation (PIC).

According to a variant of the embodiment of the detector DET2 relative to the soft output estimates computation, the soft output estimates relative to coded bits associated to $M$-$s$ non-combined modulation symbols are iteratively computed and take into account the a priori probabilities $\pi(cj)$ associated to the coded bits of said $M$-$s$ non-combined modulation symbols which are given by the output of the decoder DEC (A. Dejonghe and L. Vanderdope, Turbo-equalization for multilevel modulation: an efficient low-complexity scheme, Proc. of the IEEE ICC 2002, vol. 25, no. 1, pp. ~1863-1867, April 2002.).

## Claims

1. Receiver of a P-length vector of received signals ($Y_d$) transmitted by a transmitter over a nested channel (NC) comprising M time slots and described by a $MxP$ channel matrix (H), said P-length vector of received signals ($Y_d$) carrying a M-length output vector (X), associated to one transmission over the nested channel (NC), some components, called combined symbols, of said M-length output vector (X) being linearly combined modulation symbols (X (i)) obtained by linear combinations of s modulation symbols (Z(i)) of a M-length vector (Z), called combined modulation symbols, and other components of said M-length output vector (X) being modulation symbols of said M-length vector of modulation symbols (Z) which are not used for defining such linear combinations, called non-combined modulation symbols, said receiver (RCV) comprising a detector (DET) and a decoder (DEC), **characterised in that** it comprises

   - a first detector (DET1) the output of which is an estimate on coded bits associated to the s combined modulation symbols of said M-length vector of modulation symbols (Z), said first detector (DET1) allowing to recover the diversity order brought by the linear combining for said estimate, and
   - a second detector (DET2) the output of which is an estimate on coded bits associated to the other M-s non-combined modulation symbols of said M-length vector of modulation symbols (Z).

2. Receiver according to claim 1, **characterised in that** the output estimate of the first detector (DET1) is obtained before the output estimate of the second detector (DET2).

3. Receiver according to claim 2, **characterised in that** the output estimate of the first detector (DET1) is taken as an additional input in the second detector (DET2).

4. Receiver according to claim 1, **characterised in that** the output estimate of the second detector (DET2) is obtained before the output estimate of the first detector (DET1).

5. Receiver according to claim 4, **characterised in that** the output estimate of the second detector (DET2) is taken as an additional input in the first detector (DET1).

6. Receiver according to one of claims 1, 2, or 4, **characterised in that** the output estimate of the first detector (DET1) is taken as an additional input in the second detector (DET2) and the output estimate of the second detector (DET2) is taken as an additional input in the first detector (DET1).

7. Receiver according to claim 6, **characterised in that** a final estimate of combined and non-combined symbols is obtained following the computation of more than one estimate from the first detector (DET1) and the computation of more than one estimate of the second detector (DET2).

8. Receiver according to one of claims 1 to 4, **characterised in that** the output estimate of the first detector (DET1) does not take into account the interference from the M-s non-combined modulation symbols of said M-length vector of modulation symbols (Z).

9. Receiver according to claim 8, **characterised in that** the output estimate of the first detector (DET1) is a function of an incomplete likelihood probability $p(Y_d|Z_{s,0})$ given by:

$$e^{\dfrac{-\|Y_d - Z_{s,0} \bullet S \bullet H\|^2}{2N_0}}$$

with $N_0$ is the noise variance, $Z_{s,0}$ is the M-length vector of modulation symbols (Z) with the M-s non combined symbols equal to 0, and $S$ is a *MxM* complex linear combining matrix which is used for obtaining said M-length output vector (X) by multiplying said M-length vector of modulation symbols (Z) by said matrix S.

10. Receiver according to one of claims 4 to 7, **characterised in that** the output estimate of the first detector (DET1) takes into account the interference from the M-s non-combined modulation symbols of said M-length vector of modulation symbols (Z).

11. Receiver according to claim 10, **characterised in that** the output estimate of the first detector (DET1) is a function of an incomplete likelihood probability $p(Y_d Z_{s,0})$ given by:

$$e^{\dfrac{-\|Y_d - Z_{s,0} \bullet S \bullet H\|^2}{2N_0 + E\left[\|Y_d - Z_{0,M-s} \bullet S \bullet H\|^2\right]}}$$

with $N_0$ is the noise variance, $Z_{0,M-s}$ is the M-length vector of modulation symbols (Z) with the s combined symbols equal to 0, and $S$ is a *MxM* complex linear combining matrix which is used for obtaining said M-length output vector (X) by multiplying said M-length vector of modulation symbols (Z) by said matrix S.

12. Receiver according to one of claims 8 to 11, **characterised in that** the output estimate of the first detector (DET1) is a hard output estimate on coded bits associated to said s combined modulation symbols obtained from a reduced-complexity search compared to an exhaustive search over all possible candidate modulation vectors.

13. Receiver according to claim 12, **characterised in that** a LLL lattice reduction is used in the detector DET1.

14. Receiver according to claim 12, **characterised in that** the first detector DET1 is a maximum likelihood (ML) detector.

15. Receiver according to one of claims 8 to 11, **characterised in that** the first detector (DET1) is a Maximum A Posteriori probability detector.

16. Receiver according to one of claims 8 to 11, **characterised in that** the output estimate of the first detector (DET1) is a soft output estimate on coded bits associated to said s combined modulation symbols obtained from a reduced-complexity computation of the marginalization compared to an exhaustive marginalization computed over all possible candidate modulation vectors.

17. Receiver according to one of claims 15 or 16, **characterised in that** the output estimate of the first detector (DET1) is a soft output estimate on coded bits associated to s combined symbols which takes into account the a priori probabilities $(\pi(c_j))$ associated to coded bits of said s combined symbols and given by the output of the decoder (DEC).

18. Receiver according to claim 15 or 16, **characterised in that** the output estimate of the first detector (DET1) is a soft output estimate on coded bits associated to s combined symbols which takes into account the a priori probabilities $(\pi(c_j))$ associated to coded bits of all modulation symbols and given by the output of the decoder (DEC).

19. Receiver as claimed in one of claims 1 to 2 or 4 to 18; **characterised in that** the output estimate of the second detector (DET2) does not take into account the interference from the s combined modulation symbols of said M-length vector of modulation symbols (Z).

**20.** Receiver according to claim 19, **characterised in that** the estimate on coded bits associated to a non-combined modulation symbol of said M-length vector or modulation symbols (Z) is computed independently to each other.

**21.** Receiver according to claim 19, **characterised in that** the estimate on coded bits associated to the non-combined modulation symbols of said M-length vector of modulation symbols (Z) are jointly computed.

**22.** Receiver according to one of claims 19 to 21, the output estimate of the second detector (DET2) being a soft output estimate, **characterised in that** said soft output estimate is iteratively computed and takes into account the a priori probabilities ($\pi(c_j)$) associated to the coded bits of said M-s non-combined modulation symbols and given by the output of the decoder (DEC).

**23.** System for transmitting information data comprising a receiver conform to one of claimed 1 to 22 and a transmitter (TRD) comprising an encoder (ENC) following a error correcting code structure, a binary modulator (MOD) the output of which are M-length vectors (Z) of modulation symbols (Z(i)) and a linear combiner (LC) a parameter of which is said number s, called the combining size, and the output of said linear combiner (LC) being said M-length output vector (X).

**24.** System according to claim 23, **characterised in that** the nested channel (NC) is a sliding triangular channel defined by the Amplify-and-Forward protocol using multiple relays, one use of said sliding Triangular channel including a number of time slots M of the Slotted Amplify-and-Forward protocol equal to the number of relays plus one; said sliding triangular channel is described by the following upper-triangular matrix:

$$
H = \begin{bmatrix} a_1 & a_2 & a_3 & a_4 & \cdots & a_M \\ 0 & a_1 & a_3 & & & \vdots \\ \vdots & \ddots & a_1 & a_4 & & \vdots \\ \vdots & & & a_1 & \ddots & \vdots \\ \vdots & & & & a_1 & a_M \\ 0 & \cdots & \cdots & \cdots & 0 & a_1 \end{bmatrix} \otimes \begin{bmatrix} \gamma_{1,1} & \gamma_{1,2} & \cdots & \cdots & \cdots & \gamma_{1,M} \\ 0 & \gamma_{2,2} & & & & \vdots \\ \vdots & & \ddots & & & \vdots \\ \vdots & & & \ddots & & \vdots \\ \vdots & & & & \ddots & \vdots \\ 0 & \cdots & \cdots & \cdots & 0 & \gamma_{M,M} \end{bmatrix}
$$

where $\otimes$ denotes the term by term product, $\alpha_1, \alpha_2, ..., \alpha_M$ are the fading random variable coefficients establishing the diversity properties of the channel and the $\gamma_{i,j}$ values are random variables or fixed parameters.

**25.** System according to claim 24, **characterised in that** the sliding triangular channel is defined by a SAF protocol for cooperative transmissions with several relays.

**26.** System according to one of claims 23 to 25, the combined symbols (X(i)) of said M-length output vector (X) being obtained by the product of a M-length vector of modulation symbols (Z) by a *MxM* complex linear combining matrix (S), **characterised in that** said *MxM* complex linear combining matrix (*S*) is given by the matrix multiplication $P_1 x S' x P_2$, where $P_1$ is a row permutation matrix, $P_2$ is a column permutation matrix, and *S'* is defined as a block diagonal matrix:

$$
S' = \begin{bmatrix} S'' & 0 \\ 0 & I_{(M-s)x(M-s)} \end{bmatrix}
$$

where *I* is the identity matrix and the sub-matrix *S"* is a *sxs* complex combining matrix which satisfies that if an optimal hard output detector is used for receiving s symbols linearly combined by said sub-matrix *S"* and transmitted on a diagonal independent fading channel, the performance measured at the output of the detector DET exhibits a diversity order s times higher than the performance with no linear combining matrix *S"*.

**27.** System according to claim 26, **characterised in that** the sub-matrix S" is defined in order that the first symbol (X(1)) and last s-1 symbols (X(M+2-s),..,X(M)) of said M-length output vector (X) are linear combinations of the first s modulation symbols (Z(1),...,Z(s)) of said M-length vector of modulation symbols (Z) and each of the other symbols (X(i)) of said M-length output vector (X) is identical to one of the last M-s modulation symbols (Z(i)) of said M-length vector of modulation symbols (Z).

28. System according to one of claims 23 to 27, **characterised in that** the coding rate (Rc) of the encoder (ENC), the number M of time slots of the nested channel (NC), the combining size s and the achievable target diversity order δ are selected dependently one from each other thanks to the following relationship:

$$\delta = \min(s + \lfloor (1 - Rc)M \rfloor, M)$$

29. System according to claim 28, the nested channel (NC) being a sliding-triangular channel, **characterised in that** the combining size s of the linear combiner (LC) is chosen according to the target diversity order δ, the rate Rc of the encoder (ENC) and the number M of time slots of the nested channel (NC), thanks to the following relationship:

$$s = \arg\min_{s'} \left\{ \delta = \min(s' + \lfloor (1 - Rc)M \rfloor, M) \right\}$$

**Patentansprüche**

1. Empfänger eines Vektors der Länge P von durch einen Sender über einen verschachtelten Kanal (NC), der M Zeitschlitze aufweist und durch eine MxP-Kanalmatrix (H) beschrieben ist, empfangenen Signalen $(Y_d)$, wobei der Vektor der Länge P von empfangenen Signalen $(Y_d)$ einen Ausgabevektor (X) der Länge M trägt, und zwar zugehörig zu einer Sendung über den verschachtelten Kanal (NC), wobei einige Komponenten, die kombinierte Symbole genannt werden, des Ausgabevektors (X) der Länge M linear kombinierte Modulationssymbole (X(i)) sind, die durch Linearkombinationen von s Modulationssymbolen (Z(i)) eines Vektors (Z) der Länge M, die kombinierte Modulationssymbole genannt werden, erhalten werden, und wobei andere Komponenten des Ausgabevektors (X) der Länge M Modulationssymbole des Vektors der Länge M von Modulationssymbolen (Z) sind, die nicht zum Definieren solcher Linearkombinationen verwendet werden und die nichtkombinierte Modulationssymbole genannt werden, wobei der Empfänger (RCV) einen Detektor (DET) und einen Decoder (DEC) aufweist, **dadurch gekennzeichnet, dass** er folgendes aufweist:

   - einen ersten Detektor (DET1), dessen Ausgabe eine Schätzung über codierte Bits ist, die zu den s kombinierten Modulationssymbolen des Vektors der Länge M von Modulationssymbolen (Z) gehören, wobei der Detektor (DET1) zulässt, die durch das lineare Kombinieren gebrachte Diversitätsordnung für die Schätzung wiederzuerlangen, und
   - einen zweiten Detektor (DET2), dessen Ausgabe eine Schätzung über codierte Bits ist, die zu den anderen M-s nichtkombinierten Modulationssymbolen des Vektors der Länge M von Modulationssymbolen (Z) gehören.

2. Empfänger nach Anspruch 1, **dadurch gekennzeichnet, dass** die Ausgabeschätzung des ersten Detektors (DET1) vor der Ausgabeschätzung des zweiten Detektors (DET2) erhalten wird.

3. Empfänger nach Anspruch 2, **dadurch gekennzeichnet, dass** die Ausgabeschätzung des ersten Detektors (DET1) als eine zusätzliche Eingabe in dem zweiten Detektor (DET2) genommen wird.

4. Empfänger nach Anspruch 1, **dadurch gekennzeichnet, dass** die Ausgabeschätzung des zweiten Detektors (DET2) vor der Ausgabeschätzung des ersten Detektors (DET1) erhalten wird.

5. Empfänger nach Anspruch 4, **dadurch gekennzeichnet, dass** die Ausgabeschätzung des zweiten Detektors (DET2) als eine zusätzliche Eingabe in dem ersten Detektor (DET1) genommen wird.

6. Empfänger nach einem der Ansprüche 1, 2 oder 4, **dadurch gekennzeichnet, dass** die Ausgabeschätzung des ersten Detektors (DET1) als eine zusätzliche Eingabe in dem zweiten Detektor (DET2) genommen wird und die Ausgabeschätzung des zweiten Detektors (DET2) als eine zusätzliche Eingabe in dem ersten Detektor (DET1) genommen wird.

**7.** Empfänger nach Anspruch 6, **dadurch gekennzeichnet, dass** eine Endschätzung von kombinierten und nichtkombinierten Symbolen nach der Berechnung von mehr als einer Schätzung von dem ersten Detektor (DET1) und der Berechnung von mehr als einer Schätzung des zweiten Detektors (DET2) erhalten wird.

**8.** Empfänger nach einem der Ansprüche 1 bis 4, **dadurch gekennzeichnet, dass** die Ausgabeschätzung des ersten Detektors (DET1) die Interferenz von den M-s nichtkombinierten Modulationssymbolen des Vektors der Länge M von Modulationssymbolen (Z) nicht berücksichtigt.

**9.** Empfänger nach Anspruch 8, **dadurch gekennzeichnet, dass** die Ausgabeschätzung des ersten Detektors (DET1) eine Funktion einer unvollständigen Likelihood-Wahrscheinlichkeit $p(Y_d|Z_{s,0})$ ist, die gegeben ist durch:

$$e^{\dfrac{-\left|Y_d - Z_{s,0} \bullet S \bullet H\right|^2}{2N_0}}$$

wobei $N_0$ die Rauschvarianz ist, $Z_{s,0}$ der Vektor der Länge M von Modulationssymbolen (Z) ist, wobei die M-s nichtkombinierten Symbole gleich 0 sind, und S eine komplexe Linearkombinations-MxM-Matrix ist, die zum Erhalten des Ausgabevektors (X) der Länge M durch Multiplizieren des Vektors der Länge M von Modulationssymbolen (Z) mit der Matrix S verwendet wird.

**10.** Empfänger nach einem der Ansprüche 4 bis 7, **dadurch gekennzeichnet, dass** die Ausgabeschätzung des ersten Detektors (DET1) die Interferenz von den M-s nichtkombinierten Modulationssymbolen des Vektors der Länge M von Modulationssymbolen (Z) berücksichtigt.

**11.** Empfänger nach Anspruch 10, **dadurch gekennzeichnet, dass** die Ausgabeschätzung des ersten Detektors (DET1) eine Funktion einer unvollständigen Likelihood-Wahrscheinlichkeit $p(Y_d|Z_{s,0})$ ist, die gegeben ist durch:

$$e^{\dfrac{-\left|Y_d - Z_{s,0} \bullet S \bullet H\right|^2}{2N_0 + E\left[\left|Y_d - Z_{0,M-s} \bullet S \bullet H\right|^2\right]}}$$

wobei $N_0$ die Rauschvarianz ist, $Z_{0,M-s}$ der Vektor der Länge M von Modulationssymbolen (Z) ist, wobei die s kombinierten Symbole gleich 0 sind, und S eine komplexe Linearkombinations-MxM-Matrix ist, die zum Erhalten des Ausgabevektors (X) der Länge M durch Multiplizieren des Vektors der Länge M von Modulationssymbolen (Z) mit der Matrix S verwendet wird.

**12.** Empfänger nach einem der Ansprüche 8 bis 11, **dadurch gekennzeichnet, dass** die Ausgabeschätzung des ersten Detektors (DET1) eine harte Ausgabeschätzung an codierten Bits ist, die zu den aus einer im Vergleich mit einer erschöpfenden Suche über alle möglichen Kandidaten-Modulationsvektoren Suche mit reduzierter Komplexität erhaltenen s kombinierten Modulationssymbolen gehören.

**13.** Empfänger nach Anspruch 12, **dadurch gekennzeichnet, dass** eine LLL-Gitterreduktion in dem Detektor DET1 verwendet wird.

**14.** Empfänger nach Anspruch 12, **dadurch gekennzeichnet, dass** der erste Detektor DET1 ein Maximum-Likelihood-(ML-)Detektor ist.

**15.** Empfänger nach einem der Ansprüche 8 bis 11, **dadurch gekennzeichnet, dass** der erste Detektor (DET1) ein Maximum-A-Posteriori-Wahrscheinlichkeitsdetektor ist.

**16.** Empfänger nach einem der Ansprüche 8 bis 11, **dadurch gekennzeichnet, dass** die Ausgabeschätzung des ersten Detektors (DET1) eine weiche Ausgabeschätzung an codierten Bits ist, die zu den aus einer im Vergleich mit einer über alle möglichen Kandidaten-Modulationsvektoren berechneten erschöpfenden Marginalisierung Berechnung der Marginalisierung mit reduzierter Komplexität erhaltenen s kombinierten Modulationssymbolen gehören.

**17.** Empfänger nach Anspruch 15 oder 16, **dadurch gekennzeichnet, dass** die Ausgabeschätzung des ersten Detektors (DET1) eine weiche Ausgabeschätzung an codierten Bits ist, die zu s kombinierten Symbolen gehören, welche die A-Priori-Wahrscheinlichkeiten ($\pi(c_j)$) berücksichtigt, die zu codierten Bits der s kombinierten Symbole gehören und durch die Ausgabe des Decoders (DEC) gegeben sind.

18. Empfänger nach Anspruch 15 oder 16, **dadurch gekennzeichnet, dass** die Ausgabeschätzung des ersten Detektors (DET1) eine weiche Ausgabeschätzung an codierten Bits ist, die zu s kombinierten Symbolen gehören, welche die A-Priori-Wahrscheinlichkeiten ($\pi(c_j)$) berücksichtigt, die zu codierten Bits aller Modulationssymbole gehören und durch die Ausgabe des Decoders (DEC) gegeben sind.

19. Empfänger nach einem der Ansprüche 1 bis 2 oder 4 bis 18, **dadurch gekennzeichnet, dass** die Ausgabeschätzung des zweiten Detektors (DET2) die Interferenz von den s kombinierten Modulationssymbolen des Vektors der Länge M von Modulationssymbolen (Z) nicht berücksichtigt.

20. Empfänger nach Anspruch 19, **dadurch gekennzeichnet, dass** die Schätzung an codierten Bits, die zu einem nichtkombinierten Modulationssymbol des Vektors der Länge M von Modulationssymbolen (Z) gehören, unabhängig voneinander berechnet wird.

21. Empfänger nach Anspruch 19, **dadurch gekennzeichnet, dass** die Schätzung an codierten Bits, die zu den nichtkombinierten Modulationssymbol des Vektors der Länge M von Modulationssymbolen (Z) gehören, gemeinsam berechnet wird.

22. Empfänger nach einem der Ansprüche 19 bis 21, wobei die Ausgabeschätzung des zweiten Detektors (DET2) eine weiche Ausgabeschätzung ist, **dadurch gekennzeichnet, dass** die weiche Ausgabeschätzung iterativ berechnet wird und die A-Priori-Wahrscheinlichkeiten ($\pi(c_j)$) berücksichtigt, die zu den codierten Bits der M-s nichtkombinierten Modulationssymbole gehören und durch die Ausgabe des Decoders (DEC) gegeben sind.

23. System zu Senden von Informationsdaten mit einem Empfänger gemäß einem der Ansprüche 1 bis 22 und einem Sender (TRD) mit einem Codierer (ENC), der einer Fehlerkorrekturcodestruktur folgt, einem Binärmodulator (MOD), dessen Ausgabe Vektoren (Z(i)) der Länge M von Modulationssymbolen ist, und einem linearen Kombinierer (LC), von welchem ein Parameter die Zahl s ist, die die Kombinationsgröße genannt wird, und wobei die Ausgabe des linearen Kombinierers (LC) der Ausgabevektor (X) der Länge M ist.

24. System nach Anspruch 23, **dadurch gekennzeichnet, dass** der verschachtelte Kanal (NC) ein gleitender Dreieckskanal ist, der durch das Amplify-and-Forward-(Verstärken-und-Weiterleiten-)Protokoll definiert ist, das mehrere Relais verwendet, wobei eine Anwendung des gleitenden Dreieckskanals eine Anzahl von Zeitschlitzen M des geschlitzten Amplify-and-Forward-(Verstärken-und-Weiterleiten-)Protokolls gleich der Anzahl von Relais plus eins enthält, wobei der gleitende Dreieckskanal durch die folgende obere Dreiecksmatrix beschrieben ist:

$$H = \begin{bmatrix} a_1 & a_2 & a_3 & a_4 & \cdots & a_M \\ 0 & a_1 & a_3 & \vdots & & \vdots \\ \vdots & \ddots & a_1 & a_4 & & \vdots \\ \vdots & & \ddots & a_1 & \ddots & \vdots \\ \vdots & & & \ddots & a_1 & a_M \\ 0 & \cdots & \cdots & \cdots & 0 & a_1 \end{bmatrix} \otimes \begin{bmatrix} \gamma_{1,1} & \gamma_{1,2} & \cdots & \cdots & \cdots & \gamma_{1,M} \\ 0 & \gamma_{2,2} & & & & \vdots \\ \vdots & & \ddots & \ddots & & \vdots \\ \vdots & & & \ddots & \ddots & \vdots \\ \vdots & & & & \ddots & \ddots & \vdots \\ 0 & \cdots & \cdots & \cdots & 0 & \gamma_{M,M} \end{bmatrix}$$

wobei $\otimes$ das Term-mal-Term-Produkt bezeichnet, $a_1$, $a_2$, ..., $a_M$ die Fadingkoeffizienten-Zufallsvariablen sind, die die Diversitätswahrscheinlichkeiten des Kanals bilden, und die $\gamma_{i,j}$-Werte Zufallsvariable oder feste Werte sind.

25. System nach Anspruch 24, **dadurch gekennzeichnet, dass** der gleitende Dreieckskanal durch ein SAF-Protokoll für kooperative Sendungen mit einigen Relais definiert ist.

26. System nach einem der Ansprüche 23 bis 25, wobei die kombinierten Symbole (X(i)) des Ausgabevektors (X) der Länge M durch das Produkt eines Vektors der Länge M von Modulationssymbolen (Z) mit einer komplexen Linearkombinations-MxM-Matrix (S) erhalten wird, **dadurch gekennzeichnet, dass** die komplexe Linearkombinations-MxM-Matrix (S) durch die Matrizenmultiplikation $P_1 x S' x P_2$ gegeben ist, wobei $P_1$ eine Zeilenpermutationsmatrix ist, $P_2$ eine Spaltenpermutationsmatrix ist und S' als eine Blockdiagonalmatrix definiert ist:

$$S' = \begin{bmatrix} S'' & 0 \\ 0 & I_{(M-s)x(M-s)} \end{bmatrix}$$

wobei I die Identitätsmatrix ist und die Untermatrix S" eine komplexe sxs-Kombinationsmatrix ist, die erfüllt, dass, wenn ein optimaler Detektor für eine harte Ausgabe zum Empfangen von s Symbolen, die durch die Untermatrix S" linear kombiniert und auf einem diagonalen unabhängigen Fadingkanal gesendet sind, verwendet wird, die an dem Ausgang des Detektors DET gemessene Leistung eine Diversitätsordnung zeigt, die s Mal höher als die Leistung ohne Linearkombinationsmatrix S" ist.

**27.** System nach Anspruch 26, **dadurch gekennzeichnet, dass** die Untermatrix S" definiert ist, damit das erste Symbol (X(1)) und die letzten s-1 Symbole (X(M+2-s), ..., X(M)) des Ausgabevektors (X) der Länge M Linearkombinationen der ersten s Modulationssymbole (Z(1), ..., Z(s)) des Vektors der Länge M von Modulationssymbolen (Z) sind und jedes der anderen Symbole (X(i)) des Ausgabevektors (X) der Länge M identisch zu einem der letzten M-s Modulationssymbole (Z(i)) des Vektors der Länge M von Modulationssymbolen (Z) ist.

**28.** System nach einem der Ansprüche 23 bis 27, **dadurch gekennzeichnet, dass** die Codierrate (Rc) des Codierers (ENC), die Anzahl von Zeitschlitzen des verschachtelten Kanals (NC), die Kombinierrate s und die erreichbare Soll-Diversitätsordnung δ dank der folgenden Beziehung abhängig voneinander ausgewählt werden:

$$\delta = \min(s + \lfloor (1 - Rc(M \rfloor, M)$$

**29.** System nach Anspruch 28, wobei der verschachtelte Kanal (NC) ein gleitender Dreieckskanal ist, **dadurch gekennzeichnet, dass** die Kombiniergröße s des Linearkombinierers (LC) dank der folgenden Beziehung gemäß der Soll-Diversitätsordnung δ, der Rate Rc des Codierers (ENC) und der Anzahl M von Zeitschlitzen des verschachtelten Kanals (NC) ausgewählt wird:

$$s = \arg\min\{\delta = \min(s' + \lfloor (1 - Rc(M \rfloor, M)\}$$

**Revendications**

**1.** Récepteur d'un vecteur de P signaux reçus ($Y_d$) transmis par un transmetteur via un canal imbriqué (NC) comprenant M intervalles de temps et décrit par une matrice (H) de *MxP* canaux, ledit vecteur de P signaux reçus ($Y_d$) portant un vecteur de sortie (X) de dimension M associé à une transmission via le canal imbriqué (NC), des composantes, appelées symboles combinés, dudit vecteur de sortie (X) de dimension M étant des symboles de modulation linéairement combinés (X(i)) obtenus par des combinaisons linéaires de s symboles de modulation (Z(i)) d'un vecteur (Z) de dimension M, appelés symboles de modulation combinés, et d'autres composantes dudit vecteur de sortie (X) de dimension M étant des symboles de modulation dudit vecteur (Z) de dimension M de symboles de modulation qui ne sont pas utilisés pour définir de telles combinaisons linéaires, appelés symboles de modulation non combinés, ledit récepteur (RCV) comprenant un détecteur (DET) et un décodeur (DEC), **caractérisé en ce qu'**il comprend

- un premier détecteur (DET1) dont la sortie est une estimée sur des bits codés associés aux s symboles de modulation combinés dudit vecteur (Z) de dimension M de symboles de modulation, ledit premier détecteur (DET1) permettant de récupérer l'ordre de diversité apporté par la combinaison linéaire pour ladite estimée, et

- un second détecteur (DET2) dont la sortie est une estimée sur des bits codés associés aux autres M-s symboles de modulation non combinés dudit vecteur (Z) de dimension M de symboles de modulation.

2. Récepteur selon la revendication 1, **caractérisé en ce que** l'estimée en sortie du premier détecteur (DET1) est obtenue avant l'estimée en sortie du second détecteur (DET2).

3. Récepteur selon la revendication 2, **caractérisé en ce que** l'estimée en sortie du premier détecteur (DET1) est prise comme une entrée additionnelle dans le second détecteur (DET2).

4. Récepteur selon la revendication 1, **caractérisé en ce que** l'estimée en sortie du second détecteur (DET2) est obtenue avant l'estimée en sortie du premier détecteur (DET1).

5. Récepteur selon la revendication 4, **caractérisé en ce que** l'estimée en sortie du second détecteur (DET2) est prise comme une entrée additionnelle dans le premier détecteur (DET1).

6. Récepteur selon l'une des revendications 1, 2 ou 4, **caractérisé en ce que** l'estimée en sortie du premier détecteur (DET1) est prise comme une entrée additionnelle dans le second détecteur (DET2) et l'estimée en sortie du second détecteur (DET2) est prise comme une entrée additionnelle dans le premier détecteur (DET1).

7. Récepteur selon la revendication 6, **caractérisé en ce que** une estimée finale des symboles combinés et non combinés est obtenue suivant le calcul de plus d'une estimée à partir du premier détecteur (DET1) et le calcul de plus d'une estimée du second détecteur (DET2).

8. Récepteur selon l'une des revendications 1 à 4, **caractérisé en ce que** l'estimée en sortie du premier détecteur (DET1) ne tient pas compte de l'interférence venant des M-s symboles de modulation non combinés dudit vecteur (Z) de dimension M de symboles de modulation.

9. Récepteur selon la revendication 8, **caractérisé en ce que** l'estimée en sortie du premier détecteur (DET1) est une fonction probabilité de vraisemblance incomplète $p(Y_d|Z_{s.0})$ donnée par:

$$e^{\dfrac{-\left\|Y_d - Z_{s.0} * S * H\right\|^2}{2N_0}}$$

avec $N_0$ est la variance du bruit, $Z_{s,0}$ est le vecteur (Z) de dimension M de symboles de modulation avec les M-s symboles non combinés égaux à 0, et $S$ est une matrice de $MxM$ combinaisons linéaires complexes qui est utilisée pour obtenir ledit vecteur de sortie (X) de dimension M en multipliant ledit vecteur (Z) de dimension M de symboles de modulation par ladite matrice S.

10. Récepteur selon l'une des revendications 4 à 7, **caractérisé en ce que** l'estimée en sortie du premier détecteur (DET1) tient compte de l'interférence venant des M-s symboles de modulation non combinés dudit vecteur (Z) de dimension M de symboles de modulation.

11. Récepteur selon la revendication 10, **caractérisé en ce que** l'estimée en sortie du premier détecteur (DET1) est une fonction probabilité de vraisemblance incomplète $p(Y_d Z_{s,0})$ donnée par:

$$e^{\dfrac{-\left\|Y_d - Z_{s.0} * S * H\right\|^2}{2N_0 + E\left[\left\|Y_d - Z_{0.M-s} * S * H\right\|^2\right]}}$$

avec $N_0$ la variance du bruit, $Z_{0.M-s}$ est le vecteur (Z) de dimension M de symboles de modulation avec les s symboles combinés égaux à 0, et S est une matrice de $MxM$ combinaisons linéaires complexes qui est utilisée pour obtenir ledit vecteur de sortie (X) de dimension M en multipliant ledit vecteur (Z) de dimension M de symboles de modulation par ladite matrice S.

12. Récepteur selon l'une des revendications 8 à 11, **caractérisé en ce que** l'estimée en sortie du premier détecteur (DET1) est une estimée dure sur des bits codés associés auxdits s symboles de modulation combinés obtenus à partir d'une recherche de complexité réduite comparée à une recherche exhaustive sur tous les vecteurs de modulation candidats possibles.

13. Récepteur selon la revendication 12, **caractérisé en ce qu'**une réduction en traillis LLL est utilisée dans le détecteur DET 1.

14. Récepteur selon la revendication 12, **caractérisé en ce que** le premier détecteur (DET1) est un détecteur de maximum de vraisemblance (ML).

15. Récepteur selon l'une des revendications 8 à 11, **caractérisé en ce que** le premier détecteur (DET1) est un détecteur de probabilité de Maximum A Posteriori.

16. Récepteur selon l'une des revendications 8 à 11, **caractérisé en ce que** l'estimée en sortie du premier détecteur (DET1) est une estimée légère sur des bits codés associés auxdits s symboles de modulation combinés obtenus à partir d'un calcul de complexité réduite de la marginalisation comparée à une marginalisation exhaustive calculée sur tous les vecteurs de modulation candidats possibles.

17. Récepteur selon la revendication 15 ou 16, **caractérisé en ce que** l'estimée en sortie du premier détecteur (DET1) est une estimée légère sur des bits codés associés aux s symboles de modulation combinés qui tient compte des probabilités a priori $(\pi(c_j))$ associées aux bits codés desdits s symboles combinés et données par la sortie du décodeur (DEC).

18. Récepteur selon la revendication 15 ou 16, **caractérisé en ce** l'estimée en sortie du premier détecteur (DET1) est une estimée légère sur des bits codés associés aux s symboles de modulation combinés qui tient compte des probabilités a priori $(\pi(c_j))$ associées aux bits codés de tous les symboles de modulation et données par la sortie du décodeur (DEC).

19. Récepteur selon l'une des revendications 1 à 2 ou 4 à 18, **caractérisé en ce que** l'estimée en sortie du second détecteur (DET2) ne tient pas compte de l'interférence venant des s symboles de modulation combinés dudit vecteur (Z) de dimension M de symboles de modulation.

20. Récepteur selon la revendication 19, **caractérisé en ce que** l'estimée sur des bits codés associés à un symbole de modulation non-combiné dudit vecteur (Z) de dimension M de symboles de modulation est calculée indépendamment d'une autre.

21. Récepteur selon la revendication 19, **caractérisé en ce que** l'estimée sur des bits codés associés aux symboles de modulation non-combinés dudit vecteur (Z) de dimension M de symboles de modulation sont calculées conjointement.

22. Récepteur selon l'une des revendications 19 à 21, l'estimée en sortie du second détecteur (DET2) étant une estimées légère, **caractérisée en ce que** ladite estimée légère est calculée itérativement et tient compte des probabilités a priori $(\pi(c_j))$ associées aux bits codés desdits M-s symboles non-combinés et données par la sortie du décodeur (DEC).

23. système pour transmettre des données d'information comprenant un récepteur conforme à l'une des revendications 1 à 22 et un transmetteur (TRD) comprenant un encodeur (ENC) suivant une structure de code correcteur d'erreurs, un modulateur binaire (MOD) dont la sortie sont des vecteurs (Z) de dimension M de symboles de modulation et un combinateur lineaire (LC) dont un paramètre est ledit nombre s, appelé la taille de combinaison, et la sortie dudit combinateur linéaire (LC) étant ledit vecteur de sortie (X) de dimension M.

24. Système selon la revendication 23, **caractérisé en ce que** le canal imbriqué (NC) est un canal triangulaire coulissant défini par un protocole Amplifier-et-transférer utilisant de multiple relais, une utilisation dudit canal triangulaire coulissant incluant un nombre M d'intervalles de temps du protocole Amplifier-et-transférer égal au nombre de relais plus un, ledit canal triangulaire coulissant est décrit pas la matrice triangulaire supérieure suivante :

$$H = \begin{bmatrix} a_1 & a_2 & a_3 & a_4 & \cdots & a_M \\ 0 & a_1 & a_3 & \vdots & & \vdots \\ \vdots & \ddots & a_1 & a_4 & & \vdots \\ \vdots & & \ddots & a_1 & \ddots & \vdots \\ \vdots & & & \ddots & a_1 & a_M \\ 0 & \cdots & \cdots & \cdots & 0 & a_1 \end{bmatrix} \otimes \begin{bmatrix} \gamma_{1,1} & \gamma_{1,2} & \cdots & \cdots & \cdots & \gamma_{1,M} \\ 0 & \gamma_{2,2} & & & & \vdots \\ \vdots & \ddots & \ddots & & & \vdots \\ \vdots & & \ddots & \ddots & & \vdots \\ \vdots & & & \ddots & \ddots & \vdots \\ 0 & \cdots & \cdots & \cdots & 0 & \gamma_{M,M} \end{bmatrix}$$

où $\otimes$ désigne le produit terme à terme, $\alpha_1$, $\alpha_2$,..., $\alpha_M$ sont les coefficients de variables aléatoires d'affaiblissement établissant les propriétés de diversité du canal et les valeurs $\gamma_{i,j}$ sont des variables aléatoires ou des paramètres fixes.

**25.** Système selon la revendication 24, **caractérisé en ce que** le canal triangulaire coulissant est défini par un protocole SAF pour des transmission coopératives avec plusieurs relais.

**26.** Système selon l'une des revendications 23 à 25, les symboles combinés (X(i)) dudit vecteur de sortie (X) de dimension M étant obtenus par le produit d'un vecteur (Z) de dimension M de symboles de modulation par une matrice (S) de *MxM* combinaisons linéaires complexes, **caractérisé en ce que** ladite matrice (S) de *MxM* combinaisons linéaires complexes est donnée par la multiplication matricielle $P_1 x S' x P_2$, où $P_1$ est une matrice de permutation ligne, $P_2$ est une matrice de permutation colonne, et $S'$ est définie par une matrice bloc diagonal :

$$S' = \begin{bmatrix} S'' & 0 \\ 0 & I_{(M-s)x(M-s)} \end{bmatrix}$$

où I est une matrice identité et la sous-matrice S" est une matrice sxs de combinaisons complexes qui satisfait que si détecteur à sortie dure optimal est utilisé pour recevoir s symboles combinés linéairement par une sous-matrice S" et transmis sur un canal d'affaiblissement indépendant et diagonal, les performances mesurées à la sortie du détecteur DET présentent un ordre de diversité s fois plus élevé que les performances sans matrice de combinaisons complexes S".

**27.** Système selon la revendication 26, **caractérisé en ce que** la sous-matrice S" est définie de manière à ce que le premier symbole (X(1)) et les s-1 derniers symboles (X(M+2-s),..,X(M)) du vecteur de sortie (X) de dimension M sont des combinaisons linéaires des s premiers symboles de modulation (Z(1),...,Z(s)) dudit vecteur (Z) de dimension M de symboles de modulation et chaque autre symbole (X(i)) du vecteur de sortie (X) de dimension M est identique à un des M-s derniers symboles de modulation (Z(i)) dudit vecteur (Z) de dimension M de symboles de modulation.

**28.** système selon l'une des revendications 23 à 27, **caractérisé en ce que** le débit de codage (Rc) de l'encodeur (ENC), le nombre M d'intervalles de temps du canal imbriqué (NC), la taille de combinaison s et l'ordre de diversité atteignable cible $\delta$ sont sélectionnés en dépendance l'un de l'autre selon la relation suivante :

$$\delta = \min(s + \lfloor (1-Rc)M \rfloor, M)$$

**29.** système selon la revendication 28, le canal imbriqué (NC) étant un canal triangulaire coulissant, **caractérisé en ce que** la taille de combinaison s du combinateur linéaire (LC) est choisie selon l'ordre de diversité cible $\delta$, le débit Rc de l'encodeur (ENC) et le nombre M d'intervalles de temps du canal imbriqué (NC), selon la relation suivante :

$$s = \arg\min_{s'} \left\{ \delta = \min(s' + \lfloor (1-Rc)M \rfloor, M) \right\}$$

SYST

TRD

RCV

$\{b\}$ ENC INT $\{c\}$ MOD Z LC X NC $Y_d$ DINT DET $\{\hat{c}\}$ DEC $\{\hat{b}\}$

<u>Fig. 1</u>

$R_\beta$

$h_{sr,r_\beta}$

$h_{r_\beta,d}$

$R_2$

$h_{sr,r_2}$

$h_{r_2,d}$

$h_{r_1,r_2}$

$h_{sr,r_1}$

$R_1$

$h_{r_1,d}$

TRD

$h_{sr,d}$

RCV

<u>Fig. 2</u>

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **Sendonaris et al.** User cooperation diversity. Part I. system description. *IEEE Transactions on Communications,* November 2003, vol. 51 (11), 1927-1938
- **Nabar et al.** Fading relay channel: performance limits and space-time signal design. *IEEE Journal on Selected Areas in Communications,* August 2004, vol. 22 (6), 1099-1109
- **Ghassan et al.** Coding for the Non-orthogonal amplify-and-forward Cooperative channel. *Information theory workshop, 2007, ITW'07,* 2007, 626-631

- **E. Viterbo ; J. Boutros.** A universal Lattice Decoder for Fading Channels. *IEEE Trans. Inform. Theory,* July 1999, vol. 45, 1639-1642
- **J. Boutros ; N. Gresset ; L. Brunel ; M. Fossorier.** Soft-input/soft-output lattice sphere decoder for linear channels. *Proc. GlobeCom,* December 2003
- **A. Dejonghe ; L. Vanderdope.** Turbo-equalization for multilevel modulation: an efficient low-complexity scheme. *Proc. of the IEEE ICC 2002,* April 2002, vol. 25 (1), 1863-1867